# EUROPEAN PATENT APPLICATION

(11) **EP 4 718 882 A1**
(43) Date of publication of application: **01.04.2026**
(21) Application number: 24851101.6
(22) Date of filing: 08.08.2024
(51) Int. Cl.: H04W 4/02

(54) **COMMUNICATION METHOD AND APPARATUS**

(30) Priority: 10.08.2023 CN 202311012189
(71) Applicant: Huawei Technologies Co., Ltd., Shenzhen, Guangdong 518129 (CN)
(72) Inventor: CHEN, Ying, Shenzhen, Guangdong 518129 (CN); YANG, Ruonan, Shenzhen, Guangdong 518129 (CN); TIE, Xiaolei, Shenzhen, Guangdong 518129 (CN)
(74) Representative: MERH-IP Matias Erny Reichl Hoffmann Patentanwälte PartG mbB
(86) International application number: PCT/CN2024/110688
(87) International publication number: WO 2025/031456

(57) **Abstract**

This application relates to a communication method and apparatus. In the communication method, a relative location between a terminal device and a first network device changes, for example, an elevation angle of the terminal device relative to the first network device decreases. This means that the terminal device needs to frequently perform timing adjustment. As a result, a time window in which the terminal device maintains phase continuity is reduced. In other words, the terminal device cannot continue to maintain phase continuity in a first time window. Therefore, the terminal device may send, to the first network device, second information used to determine a second time window, so that the terminal device and the first network device can update a maximum time window in which the terminal device maintains phase continuity. For example, the maximum time window in which the terminal device maintains phase continuity is adjusted from the first time window to a third time window. In this way, both requirements of uplink synchronization and phase continuity are met, so that smooth implementation of JCE is ensured, thereby improving reliability of the JCE.

## Description

This application claims priority to Chinese Patent Application No. 202311012189.1, filed with the China National Intellectual Property Administration on August 10, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication technology, a demodulation reference signal (demodulation reference signal, DMRS) may be used to perform channel estimation, so that data may be demodulated based on a result of the channel estimation. To improve channel estimation accuracy and data decoding performance, a manner of performing joint channel estimation (joint channel estimation, JCE) by using DMRSs in different slots is proposed. Typically, when joint channel estimation is performed, phase continuity needs to be maintained in a time domain window (time domain window, TDW). However, in a satellite communication scenario, how to determine the time domain window becomes an urgent technical problem to be resolved at a current stage.

### SUMMARY

This application provides a communication method and apparatus, to determine, in a satellite communication scenario, a maximum time window in which a terminal device maintains phase continuity, so as to ensure smooth implementation of JCE, and further improve reliability of the JCE.

According to a first aspect, a communication method is provided. The method may be performed by a terminal device. The terminal device herein may be the terminal device itself, or may be a processor, a module, a chip, a chip system, or the like that is in the terminal device and that implements the method. In the communication method, first information may be received from a first network device, where the first information indicates a first time window, and the first time window is a maximum time window in which the terminal device maintains phase continuity; and therefore, second information may be sent to the first network device when a relative location between the terminal device and the first network device changes, where the second information is used to determine a second time window, the second time window is used to determine a third time window, and the third time window is a maximum time window in which the terminal device maintains phase continuity; and the third time window is determined based on the second time window, or the third time window is determined based on the first time window and the second time window.

It can be learned that, in the implementation, the relative location between the terminal device and the first network device changes. For example, an elevation angle of the terminal device relative to the first network device decreases. This means that the terminal device needs to frequently perform timing adjustment. As a result, a time window in which the terminal device maintains phase continuity is reduced. In other words, the terminal device cannot continue to maintain phase continuity in a first time window. Therefore, the terminal device may send, to the first network device, the second information used to determine the second time window, so that the terminal device and the first network device can update the maximum time window in which the terminal device maintains phase continuity. For example, the maximum time window in which the terminal device maintains phase continuity is adjusted from the first time window to the third time window. In this way, both requirements of uplink synchronization and phase continuity are met, so that smooth implementation of JCE is ensured, thereby improving reliability of the JCE. Similarly, when the elevation angle of the terminal device relative to the first network device increases, the terminal device may not need to frequently perform timing adjustment. As a result, the time window in which the terminal device maintains phase continuity becomes larger. However, to maximize a performance advantage of the JCE, the terminal device may send, to the first network device, the second information used to determine the second time window, so that the terminal device and the first network device can update the maximum time window in which the terminal device maintains phase continuity.

With reference to the first aspect, optionally, the method further includes: sending third information to the first network device, where the third information indicates a first set, and a time window included in the first set is a maximum time window that is supported by the terminal device and in which phase continuity is maintained; and the first time window is determined based on the first set.

It can be learned that, in the implementation, the first time window may be determined based on the maximum time window that is supported by the terminal device and in which phase continuity is maintained, so that a size of the first time window matches a capability of the terminal device, that is, a time window in which the first network device performs JCE matches the capability of the terminal device. This can improve performance of the JCE.

With reference to the first aspect, optionally, when there is one first set, the first set corresponds to one relative location; or when there are a plurality of first sets, different first sets correspond to different relative locations.

With reference to the first aspect, optionally, the time window included in the first set is determined based on a timing advance change rate and/or a Doppler change rate of the first network device.

With reference to the first aspect, optionally, that the second information is used to determine the second time window includes: There is one first set, and the second information indicates a differential value between the second time window and the time window in the first set; or there are a plurality of first sets, different first sets correspond to different index values, and the second information includes an index value of one of the plurality of first sets; or the second information indicates a differential value between the second time window and the first time window; or the second information indicates a differential value between the second time window and a fourth time window, where the fourth time window is a maximum time window that is reported by the terminal device last time and in which phase continuity is maintained.

It can be learned that, in the implementation, the second information may be reported by using a differential value or an index value. This can reduce indication overheads.

With reference to the first aspect, optionally, sending the second information to the first network device includes: sending the second information to the first network device when the differential value between the second time window and the time window in the first set is greater than or equal to a first differential value; or sending the second information to the first network device when the differential value between the second time window and the first time window is greater than or equal to the first differential value; or sending the second information to the first network device when the differential value between the second time window and the fourth time window is greater than or equal to the first differential value, where the first differential value is a predefined or preconfigured differential value, or the first differential value is indicated by the first network device to the terminal device.

With reference to the first aspect, optionally, the method further includes: sending fifth information to the first network device, where the fifth information indicates a fifth time window, and the fifth time window is determined based on a quantity of repetitions configured by the first network device, where that the third time window is determined based on the second time window includes: The third time window is a time window obtained by dividing the second time window based on the fifth time window; or that the third time window is determined based on the first time window and the second time window includes: The third time window is a time window obtained by dividing a sixth time window based on the fifth time window, and the sixth time window is a time window obtained by dividing the first time window based on the second time window.

It can be learned that, in the implementation, the third time window is determined with reference to the fifth time window determined based on the quantity of repetitions configured by the first network device, so that smooth implementation of the JCE can be better ensured, thereby improving reliability of the JCE.

With reference to the first aspect, optionally, the method further includes: receiving fourth information from the first network device, where the fourth information indicates the third time window.

It can be learned that in the implementation, the first network device may notify the terminal device of the third time window, so that the first network device and the terminal device have a consistent understanding of a time window in which phase continuity is maintained, thereby ensuring smooth implementation of the JCE.

With reference to the first aspect, optionally, the method further includes: receiving sixth information from a second network device, where the sixth information is used to determine a timing advance change rate and/or a Doppler change rate of the second network device; and sending seventh information to the second network device, where the seventh information indicates a second set, a time window included in the second set is determined based on the timing advance change rate and/or the Doppler change rate of the second network device, and the time window included in the second set is a maximum time window that is supported by the terminal device and in which phase continuity is maintained; and the second network device is a network device after the terminal device performs cell handover, or the second network device is a network device after the terminal device is to perform cell handover.

It can be learned that in the implementation, when the terminal device performs handover, the terminal device may send a capability of the terminal device to a new network device (namely, the second network device), for example, the maximum time window that is supported by the terminal device and in which phase continuity is maintained. In this way, the new network device can learn of the capability of the terminal device, so that a corresponding time window can be better configured for the terminal device.

With reference to the first aspect, optionally, that the sixth information is used to determine the timing advance change rate and/or the Doppler change rate of the second network device includes: The sixth information indicates ephemeris information and a common timing advance change rate of the second network device.

According to a second aspect, a communication method is provided. The method may be performed by a first network device. The first network device herein may be the first network device itself, or may be a processor, a module, a chip, a chip system, or the like that is in the first network device and that implements the method. In the communication method, first information may be sent to a terminal device, where the first information indicates a first time window, and the first time window is a maximum time window in which the terminal device maintains phase continuity; and therefore, second information may be received from the terminal device, where the second information is information sent by the terminal device when a relative location between the terminal device and the first network device changes, the second information is used to determine a second time window, the second time window is used to determine a third time window, and the third time window is a maximum time window in which the terminal device maintains phase continuity; and the third time window is determined based on the second time window, or the third time window is determined based on the first time window and the second time window.

With reference to the second aspect, optionally, the method further includes: receiving third information from the terminal device, where the third information indicates a first set, and a time window included in the first set is a maximum time window that is supported by the terminal device and in which phase continuity is maintained; and the first time window is determined based on the first set.

With reference to the second aspect, optionally, when there is one first set, the first set corresponds to one relative location; or when there are a plurality of first sets, different first sets correspond to different relative locations.

With reference to the second aspect, optionally, the time window included in the first set is determined based on a timing advance change rate and/or a Doppler change rate of the first network device.

With reference to the second aspect, optionally, that the second information is used to determine the second time window includes: There is one first set, and the second information indicates a differential value between the second time window and the time window in the first set; or there are a plurality of first sets, different first sets correspond to different index values, and the second information includes an index value of one of the plurality of first sets; or the second information indicates a differential value between the second time window and the first time window; or the second information indicates a differential value between the second time window and a fourth time window, where the fourth time window is a maximum time window that is reported by the terminal device last time and in which phase continuity is maintained.

With reference to the second aspect, optionally, the method further includes: receiving fifth information from the terminal device, where the fifth information indicates a fifth time window, and the fifth time window is determined based on a quantity of repetitions configured by the first network device, where that the third time window is determined based on the second time window includes: The third time window is a time window obtained by dividing the second time window based on the fifth time window; or that the third time window is determined based on the first time window and the second time window includes: The third time window is a time window obtained by dividing a sixth time window based on the fifth time window, and the sixth time window is a time window obtained by dividing the first time window based on the second time window.

With reference to the second aspect, optionally, the method further includes: sending fourth information to the terminal device, where the fourth information indicates the third time window.

According to a third aspect, a communication apparatus is provided, including a unit or a module configured to implement the method according to either the first aspect or the second aspect.

According to a fourth aspect, a communication apparatus is provided. The communication apparatus includes at least one processor and a memory. The memory is configured to store a computer program or instructions. The at least one processor is configured to execute the computer program or the instructions in the memory, to enable the method according to either the first aspect or the second aspect to be performed. Optionally, the processor may be coupled to the memory.

According to a fifth aspect, a communication system is provided. The communication system includes a terminal device and a first network device. The terminal device is configured to perform the method according to any one of the first aspect, and the first network device is configured to perform the method according to any one of the second aspect.

According to a sixth aspect, a computer-readable storage medium is provided. The computer-readable storage medium stores computer instructions. When the computer instructions are executed, a computer is enabled to perform the method according to either the first aspect or the second aspect.

According to a seventh aspect, a computer program product is provided. The computer program product includes computer program code. When the computer program code is run by a computer, the computer is enabled to perform the method according to either the first aspect or the second aspect.

According to an eighth aspect, a chip is provided. The chip includes at least one processor and an interface. The processor is configured to: read and execute instructions stored in a memory. When the instructions are run, the chip is enabled to perform the method according to either the first aspect or the second aspect.

According to a ninth aspect, a communication method is provided. The method includes the method according to any one of the first aspect and the method according to any one of the second aspect.

### BRIEF DESCRIPTION OF DRAWINGS

The following briefly describes accompanying drawings used in describing embodiments.
FIG. 1 shows a basic architecture of a communication system according to an embodiment of this application;
FIG. 2 is a diagram of NTN-device-based RAN architectures to which an embodiment of this application is applicable;
FIG. 3 is a schematic flowchart of a communication method according to an embodiment of this application;
FIG. 4 is a diagram of an elevation angle of a satellite;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be understood that the technical solutions of this application may be applied to a non-terrestrial network (non-terrestrial network, NTN) or a scenario in which the NTN and a terrestrial network (terrestrial network, TN) are integrated. The technical solutions of this application may use an access technology evolved after 5G, such as a long term evolution (long term evolution, LTE) access technology, a fifth generation mobile communication (5th generation mobile communication, 5G) access technology, or a sixth generation mobile communication (6th generation mobile communication, 6G) access technology.

The following describes a basic architecture of a communication system provided in embodiments of this application. The communication system provided in this application may include one or more network devices and one or more terminal devices.

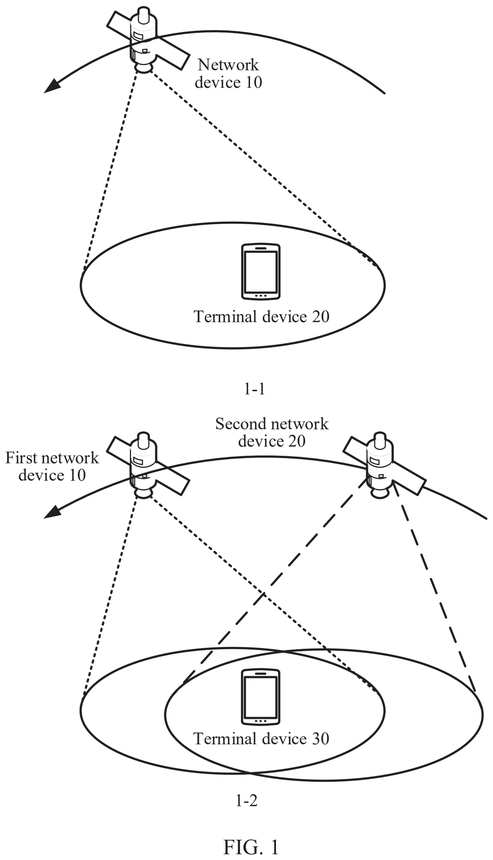

The following uses a system architecture shown in FIG. 1 as an example for description. In FIG. 1, two system architectures are provided as an example based on a scenario to which a communication system is applicable. The communication system shown in 1-1 in FIG. 1 may be applicable to a non-handover scenario. The communication system shown in 1-2 in FIG. 1 may be applicable to a handover scenario. Typically, after a terminal device establishes a connection to a network device, the terminal device may perform handover, or may not perform handover. When the terminal device performs handover, it may be considered that an involved communication system is the communication system in the handover scenario. When the terminal device does not perform handover, it may be considered that an involved communication system is the communication system in the non-handover scenario. Details are as follows:
In 1-1 in FIG. 1, the communication system includes a network device 10 and a terminal device 20 that communicates with the network device 10.
In 1-2 in FIG. 1, the communication system includes a first network device 10, a second network device 20, and a terminal device 30. Specifically, the terminal device 30 may communicate with the first network device 10 through a first cell managed by the first network device 10. Typically, due to movement of the terminal device, a service change, a network coverage status change, or another reason, the first cell cannot continue to provide a service for the terminal device 30, or the first cell provides poor quality of service for the terminal device 30. To avoid service interruption, the terminal device 30 may be handed over to a more appropriate cell, to continue to provide a service for the terminal device 30. For example, the terminal device 30 may be handed over from the first cell to a second cell managed by the second network device 20. In other words, the terminal device 30 may communicate with the second network device 20 through the second cell managed by the second network device 20.

Herein, the first network device 10 may be referred to as a source network device, and the second network device 20 may be referred to as a target network device. The source network device is a network device accessed by the terminal device before the terminal device performs handover or a network device that provides a service for the terminal device before the handover. The target network device is a network device after the terminal device performs cell handover, a network device after the terminal device is to perform cell handover, a network device accessed by the terminal device after the terminal device successfully performs handover, or a network device that provides a service for the terminal device after the successful handover. Similarly, the first cell may be referred to as a source cell, and the second cell may be referred to as a target cell. The source cell is a cell accessed by the terminal device before the terminal device performs handover. The source cell is a cell managed by the source network device, a cell covered by the source network device, or a cell managed by the source network device, or a source cell belongs to the source network device. The target cell is a cell accessed by the terminal device after the terminal device performs handover. The target cell is a cell managed by the target network device, a cell covered by the target network device, or a cell managed by the target network device, or the target cell belongs to the target network device.

Optionally, the first network device and the second network device are a same network device or different network devices, and the first cell and the second cell are a same cell or different cells.

It should be noted that the cell mentioned in this application is an NTN cell. It should be noted that quantities of network devices and terminal devices in FIG. 1 are merely examples, and should not be considered as a specific limitation on this application. The following describes in detail the terminal device and the network device that are related to the system architecture.

### 1. Terminal device

The terminal device is an entity that is on a user side and that is configured to receive a signal, or send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, a vehicle-mounted device, a wearable device (which may also be referred to as a wearable smart device), a virtual reality (virtual reality, VR) terminal, an augmented reality (augmented reality, AR) terminal, a wireless terminal in remote medical (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next generation communication system. This is not limited in embodiments of this application.

A device form of the terminal device is not limited in embodiments of this application. An apparatus for implementing a function of the terminal device may be the terminal device, or may be an apparatus, for example, a chip system, that can support the terminal device to implement the function. The apparatus may be mounted in the terminal device or used in a manner of matching a terminal device. In embodiments of this application, the chip system may include a chip, or may include a chip and another discrete component.

### 2. Network device

In this application, the network device may be referred to as an NTN network device. In the NTN, a base station or some functions of the base station is/are deployed on an NTN device (for example, a ship, a high altitude platform, an uncrewed aerial vehicle, or a satellite), to provide communication coverage for the terminal device. This improves reliability of a communication system. In other words, the network device may be a ship, a device deployed on a high altitude platform, an uncrewed aerial vehicle, a satellite, or the like.

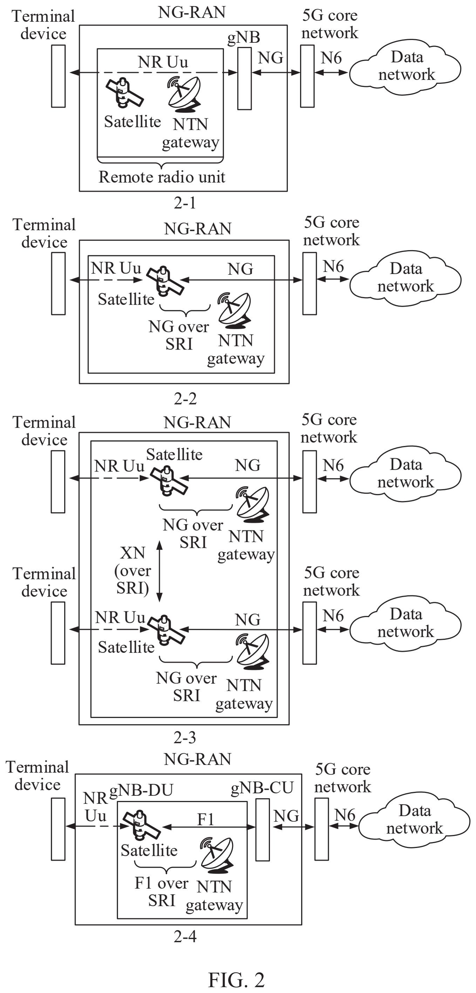

It should be understood that, in different scenarios, the satellite may have different functions. Details are as follows:
1. In a transparent satellite (transparent satellite) architecture shown in 2-1 in FIG. 2, a radio access network (radio access network, RAN) may include a radio remote unit (remote radio unit, RRU) and a base station (for example, a gNB in FIG. 2). The RRU may include a satellite and an NTN gateway (gateway). The satellite is used for radio frequency filtering (radio frequency filtering) and frequency conversion and amplification (frequency conversion and amplification), to ensure that a waveform signal repeated by a payload is unchanged (the waveform signal repeated by the payload is unchanged). In other words, the satellite is mainly used as a layer 1 (L1 for short) relay device for regenerating a physical layer signal (namely, radio frequency filtering, and frequency conversion and amplification), and does not have another higher protocol layer. The NTN gateway supports all functions for forwarding a new radio-Uu (new radio-Uu, NR-Uu) interface signal. An NR-Uu interface is an interface between a terminal device and a base station in a protocol.
2. In a regenerative satellite without inter-satellite link (regenerative satellite without inter-satellite link) architecture shown in 2-2 in FIG. 2, a RAN includes a satellite and an NTN gateway. As a base station, the satellite has a processing function of the base station. The NTN gateway is a node at a transport network layer and supports a corresponding transport protocol. The satellite is connected to the NTN gateway through a satellite radio interface (satellite radio interface, SRI). An NG interface is carried over the SRI (NG over SRI) and is responsible for higher-layer information transmission.
3. In a regenerative satellite with inter-satellite link (regenerative satellite with inter-satellite link) architecture shown in 2-3 in FIG. 2, which is similar to 2-2 in FIG. 2, a difference lies in that there is an SRI, and a plurality of satellites may be connected through an Xn interface. The Xn interface is carried over the SRI (Xn over SRI).
4. In a regenerative satellite architecture having a distributed unit (distributed unit, DU) processing function of a base station shown in 2-4 in FIG. 2, a satellite is used as a DU in the base station, and performs a base station function together with a central unit (central unit, CU). There is an NTN gateway between the DU on the satellite and the CU on the ground. The NTN gateway is a node at a transport network layer and supports a corresponding transport protocol. The satellite is connected to the NTN gateway through an F1 interface. The F1 interface is carried over an SRI (F1 over SRI).
5. In a satellite architecture with an integrated access and backhaul (integrated access and backhaul, IAB) function, a satellite is used as a base station with an IAB function.

When the satellite is used as a layer 1 relay device (namely, in the transparent satellite architecture shown in 2-1 in FIG. 2), the communication system may further include a base station. The base station may be an evolved universal terrestrial radio access (evolved universal terrestrial radio access, E-UTRA) system, an NR system, or a future radio access system defined in the 3rd generation partnership project (3rd generation partnership project, 3GPP), may be a Wi-Fi system, or may be enhanced mobile broadband (enhanced mobile broadband, eMBB), ultra-reliable and low latency communication (ultra-reliable low latency communication, URLLC), massive machine type of communication (massive machine type of communication, mMTC), a long-range internet of things (long range, LoRa) system, or an internet of vehicles system. The base station may further include the foregoing two or more different radio access systems. The base station may alternatively be an open radio access network (radio access network, RAN) (open RAN, O-RAN).

In this application, the satellite may be, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (high altitude platform station, HAPS), an evolved NodeB (evolved NodeB, eNB), or a 5G base station (gNB).

A form of the network device is not limited in embodiments of this application. An apparatus for implementing a function of the network device may be the network device, or may be an apparatus, for example, a chip system, that can support the network device to implement the function. The apparatus may be mounted in the network device or used in a manner of matching the network device.

To facilitate understanding of content of this solution, the following further explains and describes some terms in embodiments of this application, so as to facilitate understanding by a person skilled in the art. This part is merely for ease of understanding, and cannot be considered as a specific limitation on this application.

### 1. JCE

The JCE means that the network device performs channel estimation by using uplink reference signals received in a plurality of time units, and obtains channel state information (channel state information, CSI) in the plurality of time units, to demodulate and decode uplink transmissions in the plurality of time units. For the network device, the JCE may also be referred to as cross-slot channel estimation, cross-transmission channel estimation, coherent channel estimation, or the like. For the terminal device, the JCE may also be referred to as joint sending, a joint transmission, DMRS bundling (DMRS bundling), a cross-slot transmission, a coherent transmission, or the like.

The time unit mentioned in this application may be, for example, a slot (slot). In NR, duration of a frame is 10 ms, each frame is divided into 10 subframes, and duration of each subframe is 1 ms. Each subframe is divided into several slots. When a cyclic prefix (cyclic prefix, CP) is a normal cyclic prefix (normal CP, NCP), each slot includes 14 symbols. When the cyclic prefix is an extended cyclic prefix (extended CP, ECP), each slot includes 12 symbols. Certainly, with evolution of communication technologies, a quantity of symbols included in one slot may alternatively be another value. This is not limited in this application. The symbol in this application may be an orthogonal frequency-division multiplexing (orthogonal frequency-division multiplexing, OFDM) symbol.

The uplink reference signal, also referred to as a pilot signal, is a known signal provided by a transmitting end for a receiving end for channel estimation or channel sounding, and is used for channel estimation, channel quality measurement, and the like. The uplink reference signal is a reference signal sent by the terminal device to the network device, for example, a DMRS or a channel sounding reference signal (sounding reference signal, SRS).

The uplink transmission means that the terminal device sends uplink information to the network device. The uplink information includes one or more of uplink service data, uplink control information, and an uplink reference signal. For example, the uplink reference signal is a DMRS. The uplink transmission may be one or more of a physical uplink control channel (physical uplink control channel, PUCCH) and a physical uplink shared channel (physical downlink shared channel, PUSCH). In other words, all of the plurality of time units may be configured to transmit the PUCCH or the PUSCH, or some of the plurality of time units are configured to transmit the PUCCH, and the other of the plurality of time units are configured to transmit the PUSCH.

The PUSCH is used to carry uplink service data, and the uplink service data includes service data, a DMRS, and the like of the terminal device. The PUCCH is used to carry uplink control information fed back by the terminal device. The uplink control information includes channel state information (channel state information, CSI), an acknowledgment (acknowledgement, ACK), a negative acknowledgment (negative acknowledgement, NACK), a DMRS, and the like.

### 2. Time window

The time window mentioned in this application may be a time domain window (time domain window, TDW) that spans several slots or symbols. The TDW may be divided into a nominal time domain window (nominal TDW) and an actual time domain window (actual TDW). Typically, the nominal time domain window may be interrupted due to some factors, so that one nominal time domain window is divided into at least two actual time domain windows. Such factors include at least one of the following: a dynamic slot format indicator (slot format indicator, SFI), a UL cancellation indication (UL cancellation indication, UL CI), channel preemption with different priorities, timing adjustment, frequency offset correction, carrier aggregation (carrier aggregation, CA), dual-connectivity (dual-connectivity, DC), and the like. The timing adjustment may mean that the terminal device adjusts timing advance (timing advance, TA) based on a timing advance command (timing advance command, TA command) from the network device, and/or the terminal device calculates a TA error based on a downlink reference signal, and adjusts the TA when the TA error is greater than a threshold. The threshold is predefined or preconfigured, or the threshold is indicated by the network device to the terminal device.

Typically, to enable the network device to perform JCE, the terminal device needs to maintain phase continuity in a time window. For example, the terminal device sends uplink transmissions in a plurality of time units in the time window, a phase difference between uplink transmissions in adjacent time units in the plurality of time units is less than or equal to a first phase difference, and a phase difference between uplink transmissions in adjacent sub-time units in each of the plurality of time units is less than or equal to a second phase difference. In this way, it may be considered that the terminal device maintains phase continuity in the time window. For another example, the terminal device may send uplink reference signals in a plurality of time units in the time window, a phase difference between uplink reference signals in adjacent time units in the plurality of time units is less than or equal to a first phase difference, and a phase difference between uplink reference signals in adjacent sub-time units in each of the plurality of time units is less than or equal to a second phase difference. In this way, it may be considered that the terminal device maintains phase continuity in the time window. The sub-time unit may be a symbol. The first phase difference and the second phase difference may be predefined or preconfigured, or may be indicated by the network device to the terminal device.

Currently, in a TN communication scenario, to meet a phase continuity requirement, a terminal device does not perform timing adjustment in a time window. A main reason for timing adjustment is that a relative location between the terminal device and a base station changes. In the TN communication scenario, the relative location between the terminal device and the base station does not change too fast. Therefore, timing adjustment may not be performed in the time window, and phase continuity in the time window is not damaged. However, in an NTN communication scenario, a satellite is in a high-speed moving state, so that a relative location between the terminal device and the satellite changes rapidly. If the terminal device does not perform timing adjustment in a time window, uplink synchronization may fail. If timing adjustment is performed in the time window, phase continuity in the time window is damaged. Therefore, in the NTN communication scenario, when uplink synchronization is met, how to determine a time window in which phase continuity is maintained becomes an urgent technical problem to be resolved at a current stage. In view of this, this application provides a communication method, to resolve this problem.

The following describes embodiments of this application in detail. Specifically, a terminal device in the following may be the terminal device in FIG. 1, and a first network device and a second network device in the following may be the network devices in FIG. 1. It should be noted that names of messages between network elements, names of parameters in the messages, or the like in the following embodiments of this application are merely examples, and there may be other names during specific implementation. This is not specifically limited in embodiments of this application.

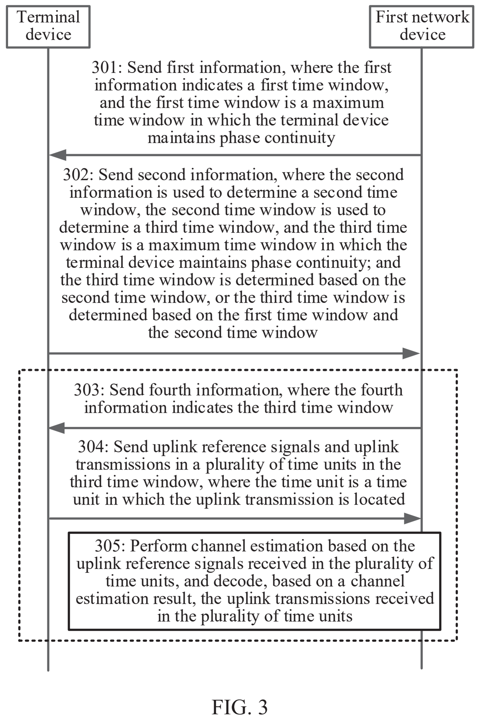

FIG. 3 shows a communication method according to an embodiment of this application. The communication method includes but is not limited to the following steps.

301: A first network device sends first information to a terminal device, where the first information indicates a first time window, and the first time window is a maximum time window in which the terminal device maintains phase continuity.

Correspondingly, the terminal device receives the first information from the first network device.

Optionally, step 301 may be performed or may not be performed.

Optionally, the first information may be carried in a radio resource control (radio resource control, RRC) message, a media access control-control element (media access control-control element, MAC CE), or downlink control information (downlink control information, DCI).

302: The terminal device sends second information to the first network device when a relative location between the terminal device and the first network device changes, where the second information is used to determine a second time window, the second time window is used to determine a third time window, and the third time window is a maximum time window in which the terminal device maintains phase continuity. The third time window is determined based on the second time window, or the third time window is determined based on the first time window and the second time window.

Optionally, the second information may be carried in an RRC message, a MAC CE, or uplink control information (uplink control information, UCI). The second information is an RRC message, a MAC CE, or UCI.

Optionally, there may be one or more third time windows. Optionally, sizes of different third time windows in the plurality of third time windows may be completely the same. Alternatively, sizes of at least two of the plurality of third time windows are different.

Optionally, the method may further include step 303.

303: The first network device sends fourth information to the terminal device, where the fourth information indicates the third time window.

Correspondingly, the terminal device receives the fourth information from the first network device.

Optionally, when the third time window is determined based on the second time window, step 303 may be performed. When the third time window is determined based on the first time window and the second time window, step 303 may be performed or may not be performed.

Optionally, the fourth information may be carried in an RRC message, a MAC CE, or DCI. Alternatively, the fourth information is an RRC message, a MAC CE, or DCI.

Optionally, after step 303, the method may further include step 304 and step 305.

304: The terminal device sends uplink reference signals and uplink transmissions in a plurality of time units in the third time window, where the time unit is a time unit in which the uplink transmission is located.

Correspondingly, the first network device receives the uplink reference signals and the uplink transmissions from the terminal device in the plurality of time units in the third time window.

Optionally, when there is one third time window, the plurality of time units are located in one third time window. When there are a plurality of third time windows, at least one of the plurality of time units may be located in one of the plurality of third time windows. In other words, the plurality of time units are distributed in the plurality of third time windows. Quantities of time units in different third time windows in the plurality of third time windows may be the same or different.

305: The first network device performs channel estimation based on the uplink reference signals received in the plurality of time units, and decodes, based on a channel estimation result, the uplink transmissions received in the plurality of time units.

The following describes specific implementations of step 301, step 302, step 304, and step 305.

### 1. Specific implementation of step 301

Optionally, the first time window may be determined based on a first set. A time window included in the first set is a maximum time window that is supported by the terminal device and in which phase continuity is maintained.

Optionally, there may be one or more first sets. When there is one first set, there may be one or more time windows included in the first set. This is not limited in this application. Only an example in which the first set includes one time window is used below for description.

That the first time window is determined based on the first set may have the following several implementations. Details are as follows:
1. When there is one first set, the first time window may be determined based on the time window in the first set and a seventh time window. The seventh time window is determined based on a quantity of repetitions configured by the first network device. It should be noted that a quantity of repetitions supported by a device (for example, the terminal device or the first network device) mentioned in this application is a quantity of repetitions for an uplink transmission supported by the device. For the terminal device, the quantity of repetitions may be described as a quantity of repetitions for uplink sending supported by the terminal device. For a network device (for example, the first network device or a second network device), the quantity of repetitions may be described as a quantity of repetitions for uplink receiving supported by the network device.

Optionally, the seventh time window may be referred to as an antenna switching window. The antenna switching window is a time length for performing antenna switching after one or more uplink transmissions are completed. An example in which an uplink transmission is a PUSCH is used. The terminal device may repeatedly transmit uplink service data on the PUSCH. Typically, when completing one or more repeated transmissions for the PUSCH, the terminal device may switch antennas. Assuming that quantities of repetitions of a PUSCH 1 to a PUSCH 3 are respectively 2, 4, and 8, and the PUSCH 1 to the PUSCH 3 each occupy one slot, there may be three antenna switching windows, which may be respectively two slots, four slots, and eight slots.

Optionally, that the seventh time window is determined based on the quantity of repetitions configured by the first network device may also be understood as that the seventh time window is determined based on a maximum quantity of repetitions configured by the first network device.

Optionally, that the first time window may be determined based on the time window in the first set and the seventh time window may be understood as that the first time window is an average value, a smallest value, a largest value, or a median of time windows obtained by dividing the time window in the first set based on the seventh time window. For example, the seventh time window is 10 slots, the time window in the first set is 16 slots, the time window in the first set may be divided into two time windows, and the two time windows are respectively 10 slots and six slots. The first time window may be an average value of the two time windows, that is, eight slots. Alternatively, the first time window may be a smallest value of the two time windows, that is, six slots. Alternatively, the first time window may be a largest value of the two time windows, that is, 10 slots.

2. When there is one first set, the first time window may be determined based on the time window in the first set and an eighth time window. Optionally, the eighth time window is determined based on a maximum TA change rate of a beam in which the terminal device is located and a common TA change rate. That the first time window may be determined based on the time window in the first set and the eighth time window may be understood as that the first time window may be an average value, a smallest value, a largest value, or a median of time windows obtained by dividing the time window in the first set based on the eighth time window.

3. When there are a plurality of first sets, the first time window may be an average value, a smallest value, a largest value, or a median in a time window included in at least one of the plurality of first sets.

It should be noted that any one of the manners 1 to 3 may be independently used as an implementation of determining the first time window. Alternatively, a combination of at least two manners of the manners 1 to 3 may be used as an implementation of determining the first time window. For example, when there are a plurality of first sets, the first time window may be determined based on the seventh time window and an average value in a time window included in at least one of the plurality of first sets. For another example, when there are a plurality of first sets, the first time window may be determined based on the eighth time window and an average value in a time window included in at least one of the plurality of first sets. The foregoing are merely several simple examples, and there is another combination manner. This is not limited in this application.

Optionally, the first set may be indicated by the terminal device to the first network device by using third information. The third information may be carried in an RRC message (for example, a terminal capability information (UE capability information) message). In this case, the third information may also be referred to as capability information.

Optionally, when there is one first set, the first set corresponds to one relative location. When there are a plurality of first sets, different first sets correspond to different relative locations.

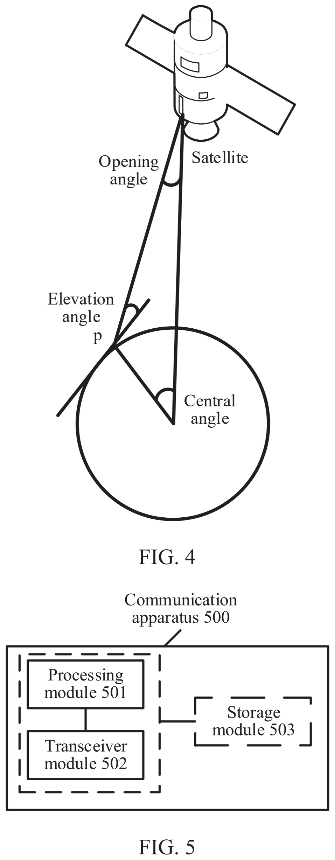

It should be noted that the relative location mentioned in this application may include an elevation angle and/or a movement speed. For example, the relative location between the terminal device and the first network device may include an elevation angle and/or a movement speed of the terminal device relative to the first network device. The following uses an example in which the first network device is a satellite to describe an elevation angle of the terminal device relative to the satellite. As shown in FIG. 4, at a given moment, an included angle between a line of sight from a point p on Earth to the satellite and a horizon at the point p is an elevation angle of the satellite. Typically, the elevation angle of the satellite is used to describe a location of the satellite above the terminal device at a moment. When the elevation angle is 90 degrees, it indicates that the satellite is right above the terminal device. In this case, the satellite does not provide a service for the terminal device. For example, the elevation angle of the satellite may be determined based on one or more of location information (for example, latitude and longitude) of the terminal device, an altitude of the satellite to the ground, an orbital angle of the satellite, and a specific location (for example, latitude and longitude) of the satellite in an orbit. Alternatively, the elevation angle of the satellite may be obtained through conversion based on angle information such as an opening angle and/or a central angle of the satellite.

Optionally, that different first sets correspond to different relative locations may also be described as that different first sets correspond to different capability levels, and one capability level corresponds to one relative location.

Optionally, the time window included in the first set may be determined based on a timing advance change rate and/or a Doppler change rate of the first network device.

A timing advance change rate of a network device (for example, the first network device or the second network device) mentioned in this application may be determined based on ephemeris information and a common timing advance change rate of the network device. A Doppler change rate of the network device may be determined based on the ephemeris information and the common timing advance change rate of the network device, and an operating frequency band of the terminal device. Ephemeris information of a network device (for example, the first network device or the second network device) mentioned in this application may include at least one of the following: an orbital angle of the network device, a movement speed of the network device, a right ascension of an ascending node, a semi-major axis of an orbital ellipse, an eccentricity of the orbital ellipse, an angular distance of a perigee, and the like.

Optionally, the ephemeris information and the common timing advance change rate of the first network device may be indicated by the first network device to the terminal device by using eighth information. The eighth information may be a system information block 19 (system information block 19, SIB19), or the eighth information is carried in the SIB19.

### 2. Specific implementation of step 302

That the second information is used to determine the second time window may have the following several implementations. Details are as follows:
1. There is one first set, and the second information indicates a differential value between the second time window and the time window in the first set.
2. There are a plurality of first sets, different first sets correspond to different index values, and the second information includes an index value of one of the plurality of first sets. For example, the second information includes an index value of a first set that has a largest index value or a smallest index value in the plurality of first sets. Alternatively, the second information includes an index value of any one of the plurality of first sets. The plurality of first sets are in one-to-one correspondence with a plurality of index values. The one-to-one correspondence (namely, the one-to-one correspondence between the plurality of first sets and the plurality of index values) may be predefined or preconfigured.
3. The second information indicates a differential value between the second time window and the first time window.
4. The second information indicates a differential value between the second time window and a fourth time window, where the fourth time window is a maximum time window that is reported by the terminal device last time and in which phase continuity is maintained. In this case, the second time window may be considered as a maximum time window in which the terminal device currently maintains phase continuity. When the relative location between the terminal device and the first network device changes last time, a maximum time window that may be reported by the terminal device and in which phase continuity is maintained may be referred to as a maximum time window that is reported by the terminal device last time and in which phase continuity is maintained.
5. The second information includes the second time window. In other words, the terminal device may indicate the second time window to the network device, so that the network device can quickly determine the third time window.

It can be learned that, for any one of the manners 1 to 4, indication overheads can be reduced.

Optionally, when the second information indicates the differential value between the second time window and the time window in the first set, that the terminal device sends the second information to the first network device may include: The terminal device sends the second information to the first network device when the differential value between the second time window and the time window is greater than or equal to a first differential value.

The first differential value is a predefined or preconfigured differential value, or the first differential value is indicated by the first network device to the terminal device. For example, the first differential value may be one slot or two slots. This is not limited herein.

Optionally, when the second information indicates the differential value between the second time window and the first time window, that the terminal device sends the second information to the first network device may include: The terminal device sends the second information to the first network device when the differential value between the second time window and the first time window is greater than or equal to the first differential value.

Optionally, when the second information indicates the differential value between the second time window and the fourth time window, that the terminal device sends the second information to the first network device may include: The terminal device sends the second information to the first network device when the differential value between the second time window and the fourth time window is greater than or equal to the first differential value.

That the third time window is determined based on the second time window may have the following several implementations. Details are as follows:
1. The third time window is less than or equal to the second time window. For example, when the first time window is less than the second time window, the third time window is less than or equal to the second time window. For example, the first time window is five slots, and the second time window is 10 slots. It is assumed that there are three third time windows. The three third time windows each may be 10 slots, eight slots, or the like. In this way, it can be ensured that a performance advantage of JCE is maximized.
2. The terminal device sends fifth information to the first network device, where the fifth information indicates a fifth time window, and the fifth time window is determined based on a quantity of repetitions configured by the first network device. The third time window is a time window obtained by dividing the second time window based on the fifth time window. For example, the fifth time window is four slots, the second time window is 16 slots, the second time window may be divided into four third time windows, and the four third time windows each are four slots. In this way, the third time window is determined with reference to the fifth time window determined based on the quantity of repetitions configured by the first network device, so that smooth implementation of JCE can be better ensured, thereby improving reliability of the JCE.

Optionally, that the fifth time window is determined based on the quantity of repetitions configured by the first network device may be understood as that the fifth time window is determined based on a maximum quantity of repetitions configured by the first network device and an antenna switching capability supported by the terminal device. Optionally, the fifth time window may be referred to as an antenna switching window.

That the third time window is determined based on the first time window and the second time window may have the following several implementations. Details are as follows:
1. The third time window is a time window obtained by dividing the first time window based on the second time window. For example, when the first time window is greater than the second time window, the third time window is a time window obtained by dividing the first time window based on the second time window. For example, the second time window is six slots, the first time window is eight slots, the first time window may be divided into two third time windows, and the two third time windows are respectively six slots and two slots. For another example, the second time window is six slots, and two first time windows each are eight slots. Each of the two first time windows may be divided into two third time windows, and the two third time windows are respectively six slots and two slots. Therefore, in this way, four third time windows may be obtained.
2. The terminal device sends fifth information to the first network device, where the fifth information indicates a fifth time window, and the fifth time window is determined based on a quantity of repetitions configured by the first network device. The third time window is a time window obtained by dividing a sixth time window based on the fifth time window, and the sixth time window is a time window obtained by dividing the first time window based on the second time window. For example, the fifth time window is four slots, the second time window is 10 slots, and the first time window is 16 slots. The first time window may be divided into two sixth time windows. The two sixth time windows are respectively 10 slots and 6 slots. A time window whose size is 10 slots in the two sixth time windows may be divided into three third time windows, and the three third time windows are respectively four slots, four slots, and two slots. A time window whose size is six slots in the two sixth time windows may be divided into two third time windows, and the two third time windows are respectively four slots and two slots. Therefore, in this way, five third time windows may be obtained. In this way, the third time window is determined with reference to the fifth time window determined based on the quantity of repetitions configured by the first network device, so that smooth implementation of JCE can be better ensured, thereby improving reliability of the JCE.
3. Specific implementation of step 303

Optionally, the fourth information indicates the third time window, there may be a plurality of third time windows, and that the fourth information indicates the third time window may be understood as one of the following:
1. The fourth information indicates a largest third time window in the plurality of third time windows.
2. The fourth information indicates a smallest third time window in the plurality of third time windows.
3. The fourth information indicates any one of the plurality of third time windows.

It should be noted that the manners 1 to 3 are examples of some possible implementations, and there are other implementations, which are not listed one by one herein.

### 4. Specific implementation of step 305

The channel estimation result mentioned in step 305 may include, for example, at least one of the following: reference signal received power (reference signal received power, RSRP), reference signal received quality (reference signal received quality, RSRQ), a received signal strength indicator (received signal strength indicator, RSSI), and a signal to interference plus noise ratio (signal to interference plus noise ratio, SINR). In this application, a specific process of decoding, based on the channel estimation result, the uplink transmissions received in the plurality of time units is not limited.

Optionally, the method may further include: The terminal device receives sixth information from a second network device, where the sixth information is used to determine a timing advance change rate and/or a Doppler change rate of the second network device; and the terminal device sends seventh information to the second network device, where the seventh information indicates a second set.

Optionally, that the sixth information is used to determine the timing advance change rate and/or the Doppler change rate of the second network device includes: The sixth information indicates ephemeris information and a common timing advance change rate of the second network device. The sixth information may be an SIB19, or the sixth information is carried in the SIB19.

A time window included in the second set is determined based on the timing advance change rate and/or the Doppler change rate of the second network device, and the time window included in the second set is a maximum time window that is supported by the terminal device and in which phase continuity is maintained.

Optionally, there may be one or more second sets. When there is one second set, there may be one or more time windows included in the second set. This is not limited in this application. Only an example in which the second set includes one time window is used below for description.

Optionally, when there is one second set, the second set corresponds to one relative location. When there are a plurality of second sets, different second sets correspond to different relative locations. Optionally, that different second sets correspond to different relative locations may also be described as that different second sets correspond to different capability levels, and one capability level corresponds to one relative location.

Optionally, the seventh information may be carried in an RRC message (for example, a UE capability information message). In this case, the seventh information may also be referred to as capability information.

In a possible implementation, that the terminal device sends the seventh information to the second network device may include: The terminal device sends the seventh information to the second network device when the relative location between the terminal device and the first network device is different from a relative location between the terminal device and the second network device. For example, when the elevation angle of the terminal device relative to the first network device is different from an elevation angle of the terminal device relative to the second network device, and/or when the movement speed of the terminal device relative to the first network device is different from a movement speed of the terminal device relative to the second network device, the terminal device sends the seventh information to the second network device.

It can be learned that, in the implementation, the relative location between the terminal device and the first network device changes. For example, an elevation angle of the terminal device relative to the first network device decreases. This means that the terminal device needs to frequently perform timing adjustment. As a result, a time window in which the terminal device maintains phase continuity is reduced. In other words, the terminal device cannot continue to maintain phase continuity in a first time window. Therefore, the terminal device may send, to the first network device, the second information used to determine the second time window, so that the terminal device and the first network device can update the maximum time window in which the terminal device maintains phase continuity. For example, the maximum time window in which the terminal device maintains phase continuity is adjusted from the first time window to the third time window. In this way, both requirements of uplink synchronization and phase continuity are met, so that smooth implementation of JCE is ensured, thereby improving reliability of the JCE. Similarly, when the elevation angle of the terminal device relative to the first network device increases, the terminal device may not need to frequently perform timing adjustment. As a result, the time window in which the terminal device maintains phase continuity becomes larger. However, to maximize a performance advantage of the JCE, the terminal device may send, to the first network device, the second information used to determine the second time window, so that the terminal device and the first network device can update the maximum time window in which the terminal device maintains phase continuity.

The foregoing mainly describes the solutions provided in this application from the perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device (for example, the first network device or the second network device) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 5 is a diagram of a structure of a communication apparatus according to an embodiment of this application. The communication apparatus 500 may be used in the method shown in the embodiment in FIG. 3. As shown in FIG. 5, the communication apparatus 500 includes a processing module 501 and a transceiver module 502. The processing module 501 may be one or more processors, and the transceiver module 502 may be a transceiver or a communication interface. The communication apparatus may be configured to implement the terminal device or the network device (for example, the first network device or the second network device) in any one of the foregoing method embodiments, or implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 500 may further include a storage module 503, and stores program code and data that are of the communication apparatus 500.

In an instance, when the communication apparatus is used as a terminal device or a chip used in the terminal device, the communication apparatus performs the steps performed by the terminal device in the foregoing method embodiments. The transceiver module 502 is specifically configured to perform a sending action and/or a receiving action performed by the terminal device in the embodiment shown in FIG. 3, for example, support the terminal device in performing another process of the technology described in this specification. The processing module 501 may be configured to support the communication apparatus 500 in performing a processing action in the foregoing method embodiments, for example, support the terminal device in performing another process of the technology described in this specification.

For example, the transceiver module 502 is configured to: receive first information from a first network device, where the first information indicates a first time window, and the first time window is a maximum time window in which the terminal device maintains phase continuity; and send second information to the first network device when a relative location between the terminal device and the first network device changes, where the second information is used to determine a second time window, the second time window is used to determine a third time window, and the third time window is a maximum time window in which the terminal device maintains phase continuity; and the third time window is determined based on the second time window, or the third time window is determined based on the first time window and the second time window.

Optionally, the transceiver module 502 is further configured to send third information to the first network device, where the third information indicates a first set, and a time window included in the first set is a maximum time window that is supported by the terminal device and in which phase continuity is maintained; and the first time window is determined based on the first set.

Optionally, when sending the second information to the first network device, the transceiver module 502 is configured to: send the second information to the first network device when a differential value between the second time window and the time window in the first set is greater than or equal to a first differential value; or send the second information to the first network device when a differential value between the second time window and the first time window is greater than or equal to the first differential value; or send the second information to the first network device when a differential value between the second time window and a fourth time window is greater than or equal to the first differential value, where the first differential value is a predefined or preconfigured differential value, or the first differential value is indicated by the first network device to the terminal device.

Optionally, the transceiver module 502 is further configured to receive fourth information from the first network device, where the fourth information indicates the third time window.

Optionally, the transceiver module 502 is further configured to send fifth information to the first network device, where the fifth information indicates a fifth time window, the fifth time window is determined based on a quantity of repetitions configured by the first network device, where that the third time window is determined based on the second time window includes: The third time window is a time window obtained by dividing the second time window based on the fifth time window; or that the third time window is determined based on the first time window and the second time window includes: The third time window is a time window obtained by dividing a sixth time window based on the fifth time window, and the sixth time window is a time window obtained by dividing the first time window based on the second time window.

Optionally, the transceiver module 502 is further configured to: receive sixth information from a second network device, where the sixth information is used to determine a timing advance change rate and/or a Doppler change rate of the second network device; and send seventh information to the second network device, where the seventh information indicates a second set, a time window included in the second set is determined based on the timing advance change rate and/or the Doppler change rate of the second network device, and the time window included in the second set is a maximum time window that is supported by the terminal device and in which phase continuity is maintained; and the second network device is a network device after the terminal device performs cell handover, or the second network device is a network device after the terminal device is to perform cell handover.

In another example, when the communication apparatus is used as a network device (for example, a first network device or a second network device) or a chip used in the network device (for example, the first network device or the second network device), the communication apparatus performs steps performed by the network device (for example, the first network device or the second network device) in the foregoing method embodiments. The transceiver module 502 is specifically configured to perform a sending action and/or a receiving action performed by the network device (such as the first network device or the second network device) in the embodiment in FIG. 3, for example, support the network device (for example, the first network device or the second network device) in performing another process of the technology described in this specification. The processing module 501 may be configured to support the communication apparatus 500 in performing a processing action in the foregoing method embodiments, for example, support the network device (for example, the first network device or the second network device) in performing another process of the technology described in this specification.

For example, the transceiver module 502 is configured to: send first information to a terminal device, where the first information indicates a first time window, and the first time window is a maximum time window in which the terminal device maintains phase continuity; and receive second information from the terminal device, where the second information is information sent by the terminal device when a relative location between the terminal device and the first network device changes, the second information is used to determine a second time window, the second time window is used to determine a third time window, and the third time window is a maximum time window in which the terminal device maintains phase continuity; and the third time window is determined based on the second time window, or the third time window is determined based on the first time window and the second time window.

Optionally, the transceiver module 502 is further configured to receive third information from the terminal device, where the third information indicates a first set, and a time window included in the first set is a maximum time window that is supported by the terminal device and in which phase continuity is maintained; and the first time window is determined based on the first set.

Optionally, the transceiver module 502 is further configured to send fourth information to the terminal device, where the fourth information indicates the third time window.

Optionally, the transceiver module 502 is further configured to receive fifth information from the terminal device, where the fifth information indicates a fifth time window, and the fifth time window is determined based on a quantity of repetitions configured by the first network device, where that the third time window is determined based on the second time window includes: The third time window is a time window obtained by dividing the second time window based on the fifth time window; or that the third time window is determined based on the first time window and the second time window includes: The third time window is a time window obtained by dividing a sixth time window based on the fifth time window, and the sixth time window is a time window obtained by dividing the first time window based on the second time window.

In a possible implementation, when the terminal device or the network device (for example, the first network device or the second network device) is a chip, the transceiver module 502 may be a communication interface, a pin, a circuit, or the like. The communication interface may be configured to input to-be-processed data to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 501 may be a processor. The processor may execute computer-executable instructions stored in the storage module, so that the chip performs the method in the embodiment shown in FIG. 3. Further, the processor may include a controller, an arithmetic logic unit, and a register. For example, the controller is mainly responsible for instruction decoding, and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computer machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, or may be implemented by using a software design, or may be implemented by using a combination of software and hardware. This is not limited herein.

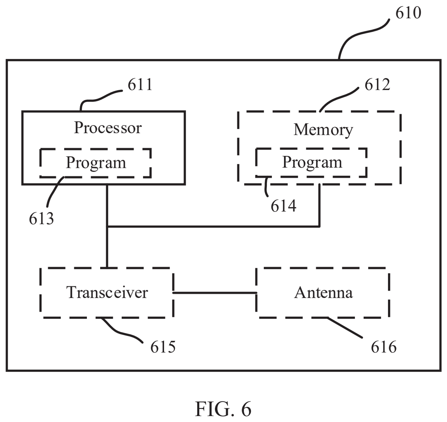

FIG. 6 is a diagram of a structure of another communication apparatus according to an embodiment of this application. It may be understood that the communication apparatus 610 includes means in necessary forms, such as modules, units, elements, circuits, or interfaces, which are appropriately configured together to implement the solution. The communication apparatus 610 may be the foregoing terminal device or network device (for example, the first network device or the second network device), or may be a component (for example, a chip) in these devices, and may be configured to implement the method described in the foregoing method embodiments. The communication apparatus 610 includes one or more processors 611. The processor 611 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a terminal device, a network device (for example, a first network device or a second network device), or a chip), execute a software program, and process data of the software program.

Optionally, in a design, the processor 611 may include a program 613 (which may also be referred to as code or instructions sometimes), and the program 613 may be run on the processor 611, so that the communication apparatus 610 performs the method described in the foregoing embodiments. In another possible design, the communication apparatus 610 includes a circuit (not shown in FIG. 6), and the circuit is configured to implement functions of the terminal device, the network device (for example, the first network device or the second network device), and the like in the foregoing embodiments. Optionally, the communication apparatus 610 may include one or more memories 612 storing a program 614 (which may also be referred to as code or instructions sometimes). The program 614 may be run on the processor 611, so that the communication apparatus 610 performs the method described in the foregoing method embodiments.

Optionally, the processor 611 and/or the memory 612 may further store data. The processor and the memory may be separately disposed, or may be integrated together.

Optionally, the communication apparatus 610 may further include a transceiver 615 and/or an antenna 616. The processor 611 may also be sometimes referred to as a processing unit, and controls a communication apparatus (for example, the terminal device or the network device (for example, the first network device or the second network device)). The transceiver 615 may also be sometimes referred to as a transceiver unit, a transceiver machine, a transceiver circuit, a transceiver, or the like, and is configured to implement receiving and sending functions of the communication apparatus via the antenna 616.

An embodiment of this application further provides a communication apparatus. The communication apparatus includes at least one processor and a memory. The memory is configured to store a computer program or instructions. The at least one processor is configured to execute the computer program or the instructions in the memory, to enable the method in any one of the implementations in the embodiment shown in FIG. 3 to be performed.

An embodiment of this application further provides a computer-readable storage medium. The computer-readable storage medium stores computer instructions. When the computer instructions are executed, a computer is enabled to perform the method in any one of the implementations in the embodiment shown in FIG. 3.

An embodiment of this application further provides a computer program product. The computer program product includes computer program code. When the computer program code is run by a computer, the computer is enabled to perform the method in any one of the implementations in the embodiment shown in FIG. 3.

An embodiment of this application further provides a chip. The chip includes at least one processor and an interface. The processor is configured to: read and execute instructions stored in a memory. When the instructions are run, the chip is enabled to perform the method in any one of the implementations in the embodiment shown in FIG. 3.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units are integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the methods in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a first network device, wherein the first information indicates a first time window, and the first time window is a maximum time window in which a terminal device maintains phase continuity; and
sending second information to the first network device when a relative location between the terminal device and the first network device changes, wherein the second information is used to determine a second time window, the second time window is used to determine a third time window, and the third time window is a maximum time window in which the terminal device maintains phase continuity; and
the third time window is determined based on the second time window, or the third time window is determined based on the first time window and the second time window.

2. The method according to claim 1, wherein the method further comprises:
sending third information to the first network device, wherein the third information indicates a first set, and a time window comprised in the first set is a maximum time window that is supported by the terminal device and in which phase continuity is maintained; and
the first time window is determined based on the first set.

3. The method according to claim 2, wherein
when there is one first set, the first set corresponds to one relative location; or
when there are a plurality of first sets, different first sets correspond to different relative locations.

4. The method according to claim 2 or 3, wherein the time window comprised in the first set is determined based on a timing advance change rate and/or a Doppler change rate of the first network device.

5. The method according to any one of claims 1 to 4, wherein that the second information is used to determine the second time window comprises:
there is one first set, and the second information indicates a differential value between the second time window and the time window in the first set; or
there are a plurality of first sets, different first sets correspond to different index values, and the second information comprises an index value of one of the plurality of first sets; or
the second information indicates a differential value between the second time window and the first time window; or
the second information indicates a differential value between the second time window and a fourth time window, wherein the fourth time window is a maximum time window that is reported by the terminal device last time and in which phase continuity is maintained.

6. The method according to any one of claims 1 to 5, wherein sending the second information to the first network device comprises:
sending the second information to the first network device when the differential value between the second time window and the time window in the first set is greater than or equal to a first differential value; or
sending the second information to the first network device when the differential value between the second time window and the first time window is greater than or equal to the first differential value; or
sending the second information to the first network device when the differential value between the second time window and the fourth time window is greater than or equal to the first differential value, wherein
the first differential value is a predefined or preconfigured differential value, or the first differential value is indicated by the first network device to the terminal device.

7. The method according to any one of claims 1 to 6, wherein the method further comprises:
sending fifth information to the first network device, wherein the fifth information indicates a fifth time window, and the fifth time window is determined based on a quantity of repetitions configured by the first network device, wherein
that the third time window is determined based on the second time window comprises: the third time window is a time window obtained by dividing the second time window based on the fifth time window; or
that the third time window is determined based on the first time window and the second time window comprises: the third time window is a time window obtained by dividing a sixth time window based on the fifth time window, and the sixth time window is a time window obtained by dividing the first time window based on the second time window.

8. The method according to any one of claims 1 to 7, wherein the method further comprises:
receiving fourth information from the first network device, wherein the fourth information indicates the third time window.

9. The method according to any one of claims 1 to 8, wherein the method further comprises:
receiving sixth information from a second network device, wherein the sixth information is used to determine a timing advance change rate and/or a Doppler change rate of the second network device; and
sending seventh information to the second network device, wherein the seventh information indicates a second set, a time window comprised in the second set is determined based on the timing advance change rate and/or the Doppler change rate of the second network device, and the time window comprised in the second set is a maximum time window that is supported by the terminal device and in which phase continuity is maintained; and
the second network device is a network device after the terminal device performs cell handover, or the second network device is a network device after the terminal device is to perform cell handover.

10. The method according to claim 9, wherein that the sixth information is used to determine the timing advance change rate and/or the Doppler change rate of the second network device comprises:
the sixth information indicates ephemeris information and a common timing advance change rate of the second network device.

11. A communication method, comprising:
sending first information to a terminal device, wherein the first information indicates a first time window, and the first time window is a maximum time window in which the terminal device maintains phase continuity; and
receiving second information from the terminal device, wherein the second information is information sent by the terminal device when a relative location between the terminal device and a first network device changes, the second information is used to determine a second time window, the second time window is used to determine a third time window, and the third time window is a maximum time window in which the terminal device maintains phase continuity; and
the third time window is determined based on the second time window, or the third time window is determined based on the first time window and the second time window.

12. The method according to claim 11, wherein the method further comprises:
receiving third information from the terminal device, wherein the third information indicates a first set, and a time window comprised in the first set is a maximum time window that is supported by the terminal device and in which phase continuity is maintained; and
the first time window is determined based on the first set.

13. The method according to claim 12, wherein
when there is one first set, the first set corresponds to one relative location; or
when there are a plurality of first sets, different first sets correspond to different relative locations.

14. The method according to claim 12 or 13, wherein the time window comprised in the first set is determined based on a timing advance change rate and/or a Doppler change rate of the first network device.

15. The method according to any one of claims 11 to 14, wherein that the second information is used to determine the second time window comprises:
there is one first set, and the second information indicates a differential value between the second time window and the time window in the first set; or
there are a plurality of first sets, different first sets correspond to different index values, and the second information comprises an index value of one of the first sets; or
the second information indicates a differential value between the second time window and the first time window; or
the second information indicates a differential value between the second time window and a fourth time window, wherein the fourth time window is a maximum time window that is reported by the terminal device last time and in which phase continuity is maintained.

16. The method according to any one of claims 11 to 15, wherein the method further comprises:
receiving fifth information from the terminal device, wherein the fifth information indicates a fifth time window, and the fifth time window is determined based on a quantity of repetitions configured by the first network device, wherein
that the third time window is determined based on the second time window comprises: the third time window is a time window obtained by dividing the second time window based on the fifth time window; or
that the third time window is determined based on the first time window and the second time window comprises: the third time window is a time window obtained by dividing a sixth time window based on the fifth time window, and the sixth time window is a time window obtained by dividing the first time window based on the second time window.

17. The method according to any one of claims 11 to 16, wherein the method further comprises:
sending fourth information to the terminal device, wherein the fourth information indicates the third time window.

18. A communication apparatus, comprising a unit or module configured to implement the method according to any one of claims 1 to 17.

19. A communication apparatus, wherein the communication apparatus comprises at least one processor and a memory, the memory is configured to store a computer program or instructions, and the at least one processor is configured to execute the computer program or the instructions in the memory, to enable the method according to any one of claims 1 to 17 to be performed.

20. A communication system, wherein the communication system comprises a terminal device and a first network device;
the terminal device is configured to perform the method according to any one of claims 1 to 10; and
the first network device is configured to perform the method according to any one of claims 11 to 17.

21. A computer-readable storage medium, wherein the computer-readable storage medium stores computer instructions, and when the computer instructions are executed, a computer is enabled to perform the method according to any one of claims 1 to 17.

22. A computer program product, wherein the computer program product comprises computer program code, and when the computer program code is run by a computer, the computer is enabled to perform the method according to any one of claims 1 to 17.

23. A chip, wherein the chip comprises at least one processor and an interface, the processor is configured to: read and execute instructions stored in a memory, and when the instructions are run, the chip is enabled to perform the method according to any one of claims 1 to 17.
